Europäisches Patentamt

European Patent Office

Office européen des brevets

(19)

(11) Publication number: **0 103 956**
**A2**

# (12) EUROPEAN PATENT APPLICATION

(21) Application number: **83304291.4**

(22) Date of filing: **25.07.83**

(51) Int. Cl.³: **B 23 Q 3/157**

(30) Priority: **19.08.82 US 409710**

(43) Date of publication of application:
**28.03.84 Bulletin 84/13**

(84) Designated Contracting States:
**CH DE FR GB IT LI**

(71) Applicant: HURCO MANUFACTURING COMPANY, INC.
6602 Guion Road Post Office Box 68180
Indianapolis Indiana 46268(US)

(72) Inventor: Smith, Joe A.
4715 Jenny's Road
Indianapolis, Indiana 46208(US)

(74) Representative: Bannerman, David Gardner et al,
Withers & Rogers 4 Dyer's Buildings Holborn
London, EC1N 2JT(GB)

(54) Automatic tool changer with curvilinear tool transfer.

(57) An automatic tool changer for a milling machine is disclosed having an endless chain conveyor for tool holder buckets. Tool holder gripping fingers, once engaged with the tool holder, move it in a strictly arcuate path from storage to the operating head of the machine. The buckets have shaped recesses for confining standard tool holders therein, and special shaped wall openings to facilitate tool holder removal when desired. The tool storage housing has a convenient hinged access door, and also a power operated bottom door, the latter being operable during a tool transfer operation, but entirely sheltered by the housing at all times.

EP 0 103 956 A2

Croydon Printing Company Ltd.

-1-

AUTOMATIC TOOL CHANGER WITH CURVILINEAR TOOL TRANSFER

Background of the Invention

Field of the Invention

This invention relates generally to automatic tool changers for machine tools, and more particularly to a tool changer particularly well suited to machining centers having limited tool spindle travel.

Description of the Prior Art

Automatic tool changers for machine tools have been known for many years. Generally speaking, they provide the advantages of greater speed and less operator effort in the performance of various machining operations on a workpiece. Their advantages have been sufficient to justify serious consideration of them for machine tools which are much smaller and less expensive than those on which automatic tool changers have been employed in most instances heretofore. Size, weight, available installation space, required space for operating the tool changer, complexity, cost, and reliability, have continued to be problems attendant the efforts to provide automatic tool changers for relatively small and inexpensive milling machines.

Two products which have appeared on the market and which appear to be results of efforts to deal with some of the above prior art problems can be mentioned here. One of them is the "Quickdraw" automatic tool changer marketed by the Industrial Power Transmission Division of The Summit/Dana Corporation of Bozeman, Montana. It includes a powered draw bar, a pneumatically operated arm and claw, and a 24 station enclosed tool carousel, all of which is mountable on the side of the milling machine adjacent the spindle.

Another product which has been recently introduced to the market is an automatic tool changer marketed by the Monarch Cortland Division of the Monarch Machine Tool Company of Cortland, New York. It swings a tool out of the spindle in an arc to minimize the clearance required between the spindle and workpiece for a tool change function.

The present invention is directed toward improving the speed and dependability, and reducing cost of an automatic tool changer requiring minimal vertical space between the spindle and the workpiece at the time of tool change.

-3-

## Summary of the Invention

Described briefly, according to a typical embodiment of the present invention, a tool changer assembly mountable to the side of a vertical milling machine head includes tool storage buckets on an endless belt conveyor in a storage housing, with reversible conveyor drive. The tool storage buckets have side openings for miminum swing-up of the tool during tool removal. Wide-opening tool transfer fingers provide direct tool transfer between machine spindle and storage bucket through an opening in the bottom of the housing. A power-operated sliding door normally closes the opening.

-4-

## Brief Description of the Drawings

Fig. 1A is a fragmentary and schematic front elevational view of a vertical spindle milling machine with a tool changer thereon according to a typical embodiment of the present invention, with a tool holder bucket containing a tool holder in a load/unload position.

Fig. 1B is a schematic top plan view of tool holder gripping fingers in a "home" position corresponding to their position in the elevational view of Fig. 1A.

Fig. 2A is a schematic front view of the gripping fingers closed onto the tool holder.

Fig. 2B is a schematic top plan view of the gripping fingers corresponding to Fig. 2A.

Fig. 3A is a schematic front view of the fingers having lifted the tool holder out of a bucket.

Fig. 3B is a schematic top plan view of the fingers in the position corresponding to Fig. 3A.

Fig. 4A is a schematic front view of the fingers in a "delivery" position having swung the tool into position for clamping in the spindle.

Fig. 4B is a schematic top plan view of the fingers in the position corresponding to Fig. 4A.

Fig. 5A is a schematic front view showing the fingers opened after clamping of the tool in the spindle.

Fig. 5B is a schematic top plan view of the fingers in the position corresponding to Fig. 5A.

Fig. 6A is a schematic front view showing the fingers returned into the storage housing.

Fig. 6B is a schematic top plan view of the fingers in the position corresponding to Fig. 6A.

Fig. 7 is an enlarged top plan view of portions of the contents of the housing, including particulary the tool storage conveyor and the tool transfer fingers.

Fig. 8 is a further enlarged front elevational view of a tool storage bucket, the view taken at line 8-8 in Fig. 7 and viewed in the direction of the arrows.

Fig. 9 is a side elevational view of a tool storage bucket taken at line 9-9 in Fig. 7 and viewed in the direction of the arrows, with a portion of the wall broken away to show, in dotted line, a tool holder resting in the bucket.

Fig. 10 is a top plan view of a tool storage bucket.

Fig. 11 is a rear elevational view of the gripping finger gear block assembly as seen at line 11-11 in Fig. 7 and viewed in the direction of the arrows and on a larger scale.

Fig. 12 is an enlarged side elevational view of the rotary actuator and stop assembly used to rotationally drive the finger gear block during tool transfer between bucket and spindle.

Fig. 13 is a front elevational view thereof taken at line 13-13 in Fig. 12 and viewed in the direction of the arrows.

Fig. 14 is a front elevational view of a rotation limit lug as seen at line 14-14 in Fig. 13 and viewed in the direction of the arrows.

Fig. 15 is a bottom plan view of the housing showing the door and actuator.

## Description of the Preferred Embodiment

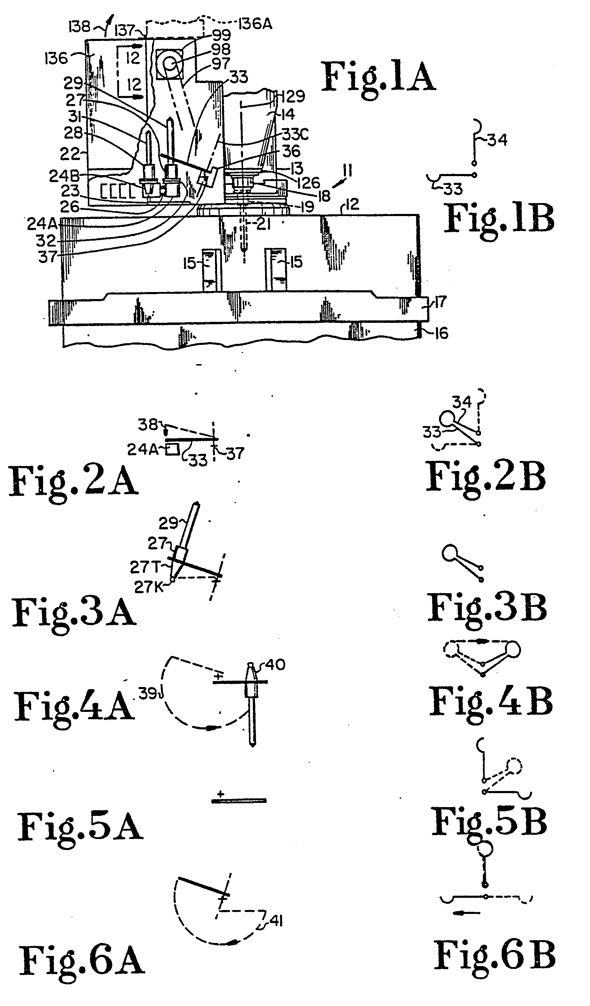

Referring now to the drawings in detail and particularly Fig. 1A, a milling machine is shown fragmentarily at 11 and includes a combination frame and cabinet 12 with a head 14 mounted to it, horizontally movable to the front and rear in the "Y" axis direction

A saddle 16 is mounted to the frame and is movable up and down on ways 15 in the "Z" axis direction. A work table 17 is mounted to the saddle and is movable to the left and right, this being the "X" axis direction.

A spindle assembly 18 projects up into the head 14, and includes a collet therein to receive a tool holder (dotted line) 19 and holds a tool therein, such as a drill 21 (dotted line), for example. All of these features can be found in a model KMB-I three-axis CNC Machining System manufactured by Hurco Manufacturing Company, Inc., of Indianapolis, Indiana.

An automatic tool changer is provided on the milling machine and includes a housing 22 and conveyor support plate 23 which serves as the automatic tool changer housing bottom. This is affixed to the machine head 14

Since Fig. 1A is primarily intended for a conceptual illustration of the invention, many details are omitted. The plate 23 supports an endless chain conveyor which has a plurality of tool storage buckets 24 spaced along and secured to the endless chain 26. Two such buckets are shown in Fig. 1A, bucket 24A being in a position for unloading a tool from it or loading a tool into it, this being referred to as a load/unload position or tool transfer point. Bucket 24B is behind 24A on the chain.

A tool holder 27 rests in the bucket 24A, and tool holder 28 rests in the bucket 24B. Each of these tool holders has a tool such as drill 29 in holder 27 and drill 31 in holder 28. These tool holders are of a conventional type well known and widely used in the art. Each has a circumferential groove 32 therein particularly suited to receiving the gripping fingers of a tool transfer mechanism in an automatic tool changer. In the tool changer of the present invention, the gripping fingers are shown at 33 and 34 (Fig. 1B). They are pivotally mounted to a gear block 36 which is mounted to pivot on a horizontal axis centered at 37. The finger axis for finger 33 is shown at 33C in Fig. 1A. It is at an angle of 10° from vertical. Accordingly, the finger 33 is upwardly inclined at 10° from horizontal. The purpose of this will become apparent as the description proceeds.

## Operation in General

Referring further to Figs. 1A through 6A and 1B through 6B, if it is desired to transfer a tool from the storage magazine, with the machine at rest as shown in Figs. 1A and 1B, the conveyor is driven around to place the bucket for the desired tool in the load/unload station where bucket 24A is located in Fig. 1. The gear block 36 is then pivoted about horizontal axis 37 in the direction of arrow 38 (Fig. 2A) to place the finger 33 in the position shown in Fig. 2A, immediately above and almost flush with the top of bucket 24A and hold it there. Then the fingers are closed as shown in Fig. 2B, whereupon the semicircular claws thereof are received in the circumferential groove 32 in the tool holder.

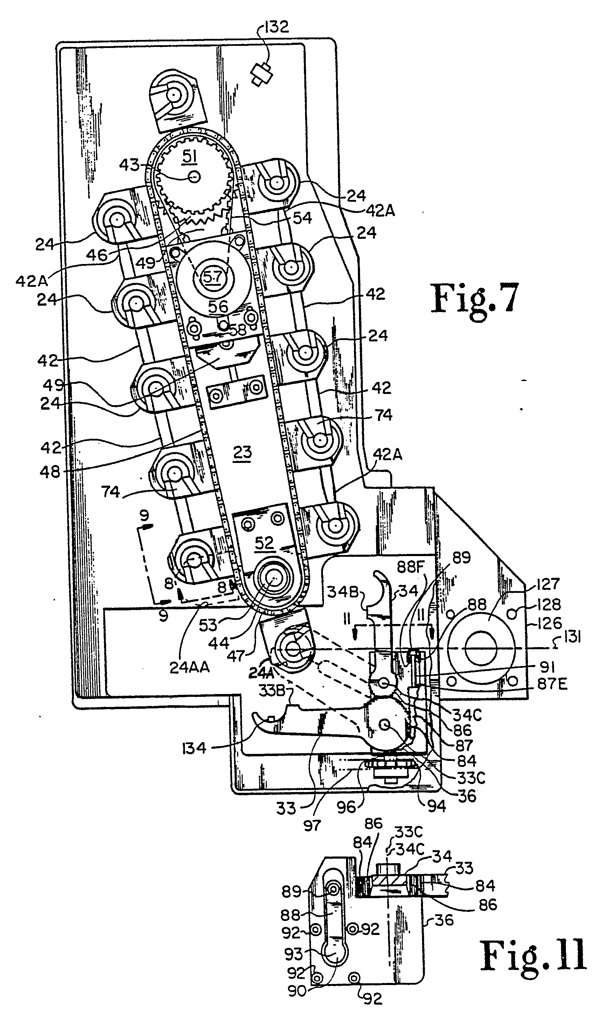

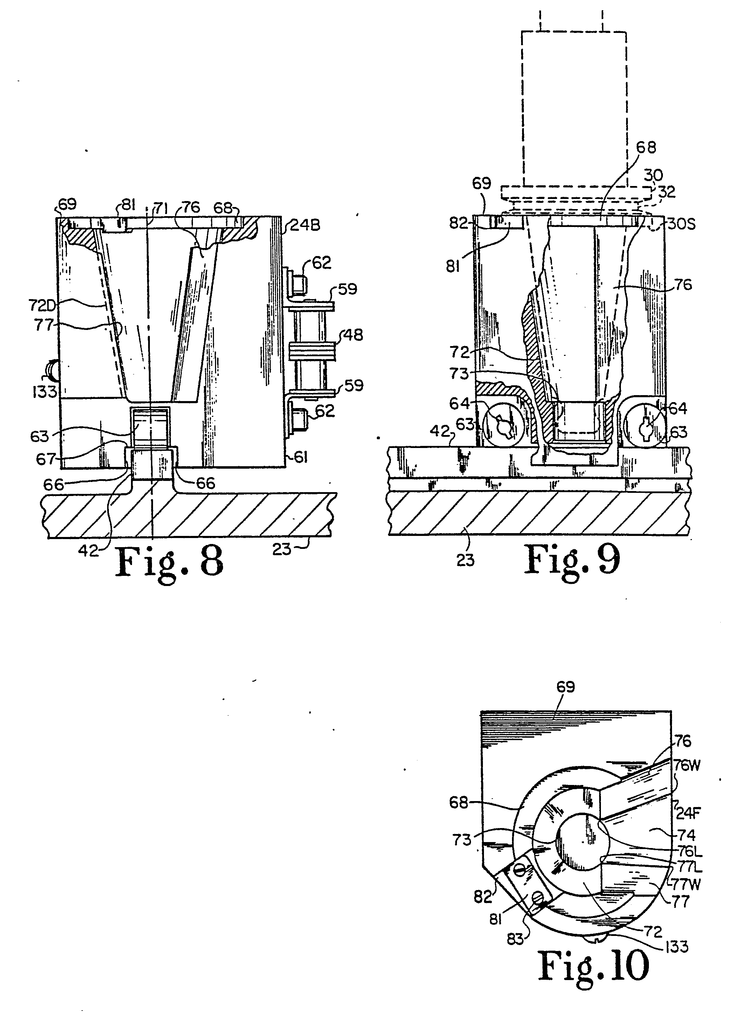

Then the gear block 36 is rocked back to the original position as shown in Figs. 1A and 3A, whereupon it removes the tool holder 27 from the bucket 24A. It is then in the position shown in Fig. 3A. Then the conveyor can be moved either backward or forward sufficiently that the fingers can swing downward in the direction of arrow 39 in Fig. 4A with the tool holder and tool therein without interferring with any of the conveyor buckets. If the conveyor is moved backward (clockwise as viewed in Fig. 7) to accomplish this, bucket 24A would then be in a "clear tool" position shown by dotted line 24AA in Fig. 7. The swinging is continued through an arc of 190° whereupon the tapered surface 40 of the tool holder is received in the matching taper of the spindle. Then, with a tool holder locking mechanism in the spindle (not shown), the tool holder is clamped in the spindle. An example of a type of locking mechanism which might be used, depending upon available space, is that shown in U. S. Patent No. 4,304,513 issued December 8, 1981 to Gerald V. Roch. Fig. 10 of that patent shows a tool holder 152 held in the taper of the spindle by collet arms 149A. The tool holder is specifically rotationally indexed with respect to the spindle in the present case by means of a key on the spindle received in a notch in the tool holder, much like the key 155 in the spindle of the above-mentioned Roch patent is received in the notch in the tool holder clamped in the spindle.

After the tool holder has been securely clamped in the spindle, the fingers again open to an essentially 90° angle between them as shown in Fig. 5B. They are then rotated back in the direction of arrow 41 (Fig. 6A) to their original position shown in Figs. 6A and 1A (6B and 1B also). As the empty bucket had been moved backward (clockwise) to place it in the "clear tool" position 24AA, the bucket ahead of it (the next one counterclockwise from it) had been backed into a position where the short finger 34 in its open, non-gripping attitude, could strike the bucket ahead of the empty bucket as the open fingers are rotated back to home position. To avoid this, the conveyor is advanced (counterclockwise) until the bucket ahead of the empty bucket is out of the way of the returning finger. The amount of conveyor movement required to provide this "clear finger" position of the bucket ahead of the empty bucket is about half the movement required to move the empty bucket from the tool change position to the tool clear position.

To remove the tool from the spindle, and return it to the bucket, the sequence of events is reversed, beginning with Figs. 6A, 6B.

Referring now specifically to Fig. 7, the housing bottom plate 23 is provided with a pair of bucket support and guide tracks 42. Plate 23 also provides support for the lower bearings for drive sprocket shaft 43 and driven sprocket shaft 44 on which the conveyor drive sprocket 46 and driven sprocket 47 are attached, respectively. An endless double roller chain 48 is mounted around these sprockets. An upper bearing support 49 is spaced above plate 23 and fastened to suitable support posts (not shown) fastened to plate 23. A gear belt pulley 51 is keyed to the upper end of the drive shaft 43.

An upper bearing support bracket 52 is fastened to plate 23 and provides a mount for the upper bearing 53 for the shaft 44, with sprocket 47 situated between plate 23 and bracket 52 in the same manner as sprocket 46 is between the base 23 and support plate 49.

The drive for the gear belt pulley 51 is provided by gear belt 54 driven by a sprocket on the lower end of a servo motor 56 having a shaft encoder 57 at the upper end of the shaft. The servo motor is mounted to a pad 58 secured to and spaced above the upper bearing support plate 49. This servo motor is the same as used on the "Autobend IV" press brake gauging system manufactured by the above mentioned Hurco Manufacturing. It is reversible and is programmed to stop upon encountering an obstruction, as is the case in the Autobend installation.

The tool holder buckets are secured to the conveyor chain 48. Buckets 24A and 24B have been mentioned already with reference to Fig. 1A and these buckets are shown in the same locations in Fig. 7. The buckets are identical and there are twelve of them equally spaced along the chain 48. As best shown in Fig. 8, at the chain link immediately adjacent a bucket, the chain is fastened to the bucket by a pair of L-shaped chain connector links 59 secured to the flat wall 61 of the bucket by a pair of socket head cap screws 62. Each of the twelve buckets is secured to the chain in the same way.

Figs. 8 and 9, when viewed together, also show bucket support rollers 63, each of which is rotatably mounted to the bucket by a shoulder bolt or screw such as 64. Cam rollers suitable for this purpose can be purchased finished. The combination of these rollers, the drive chain and the walls 66 of the bottom slot 67 of the buckets provide guidance along guide tracks 42 for the buckets as they are moved along the straight flights of the conveyor chain. Each of the tracks 42 is tapered as at 42A (Fig. 7) at each end to facilitate entrance of the track into the guide groove 67 of a bucket as the bucket moves onto the track from either the front end or rear end. This is important because, as will be described, the servo motor can drive the conveyor in either direction.

The tool receiver buckets have further important features according to the present invention. The significance of these features can be best appreciated if one recalls that the standard tool holder used in many machines with automatic tool changers includes a gripper receiver flange with the groove such as 32 (Fig. 1A) therein to receive the grippers of a tool changer. The tool holder also includes a conical portion or taper 27T receivable in a matching taper in the tool spindle. At the end of the tapered shank 27T, there is a retaining knob 27K which is typically in the form of a double truncated cone and which is engagable by the collet in the

-11-

milling machine spindle such as the collet arms in Fig. 10 of the above mentioned Roch patent.

It is an important feature of the tool holder buckets of the present invention, that they are particularly shaped to accommodate the tool holders and securely retain them in the buckets for transport, but permit easy removal by the transfer means at the transfer point. Accordingly, as shown in Figs. 7, 8, 9 and 10, each bucket has a shallow circular well 68 extending from the top surface 69 of the bucket down to a distance almost as great as the distance between the groove 32 and shank-end face 30S of the tool holder flange 30. As best shown in Fig. 10, this well extends slightly more than 180° about its axis. The axis of this well is colinear with the axis 71 of a frustoconical surface 72 which extends downward from the bottom of the well to a pocket 73 which preferably has an open bottom.

The front wall of the bucket is cut away to provide a large notch-shaped opening at 74. The wall edges 76 and 77 at the opening are sloped parallel to the slope of the conical surface 72. These wall edges are typically defined by planar surfaces and the parallelism can be best seen in Fig. 8 where it is noted that the wall edge 77 is perpendicular to the plane of the paper and parallel to the dotted line 72D representing the conical wall of the bucket. It should also be noted that the wall edges 76 and 77 are not quite tangent to the wall 72. Therefore, the width of the opening 74 is less than the diameter of the frustoconical space defined by wall 72 at all points throughout the height of the space. The opening 74 is divergent from the space outward to the outside of the bucket as best shown in Figs. 7 and 10. For example, note the intersection 76L of wall edge 76 with the wall 72 and the intersection 77L of wall edge 77 with the wall 72 at the bottom of edges 76 and 77. Also note the intersection 76W of wall edge 76 with the outside front face 24F of the bucket, and the intersection 77W of wall edge 77 with the outside face 24F at the bottom of edges 76 and 77. Intersections 76L and 77L are closer to each other than are intersections 76W and 77W.

The above described features of the buckets enable reception and confinement of the gripper flange of the tool holder in the shallow well 68 of the bucket, and the collet receiver or pull knob 27K of the tool holder in the pocket 73 of the bucket. The slope of the wall 72 provides any guidance which may be needed upon insertion of the tool in the bucket by the fingers 33 and 34, but is of adequate diameter at all points that it does not at all snugly grip or laterally confine the tool holder in the bucket. Accordingly, the tool holder is adequately confined at the top by its flange in the bucket well and at the bottom by its knob in the pocket 73. Nevertheless, because of the clearance between the tapered shank and the tapered cavity or recess 72 in the bucket, and because of the opening 74 having edges tapered parallel to the taper of the tool holder, and because of the divergence of the opening as described above, the lifting of the tool holder just enough to remove the flange from the well and the knob from the pocket enables the bucket to be moved free of the tool holder to the "clear-tool" position mentioned above as shown by the dotted line 24AA in Fig. 7.

In many milling machines having automatic tool changers, it is important that the rotational index position of the tool be known or controlled. For that purpose, the above mentioned conventional tool holders have index notches, grooves, or slots in the circumferential grooved gripper flange thereof. In many of these machines, there are keys or lugs in both the tool changer tool storage units and also the spindle, with appropriate means to maintain the appropriate index position of a tool holder during transfer from the storage unit to the spindle, and back. In the present case, the buckets are provided with index keys such as 81 (Fig. 10) in the notch 82 in the upper exterior wall of the bucket. Each of these keys projects slightly into the well 68 where it can be received in one of the two diametrically opposed keyways or index grooves in the tool holder. The key is provided with a pair of apertures receiving screws 83 by which it is secured to the bucket.

Referring again to Fig. 7, some details of the gripping fingers will now be described. The proximal end of finger 33 has a spur gear 84 shaped thereon (as by a gear shaper machine) for rotation about axis 33C on the gear block 36. Similarly, finger 34 has a spur gear 86 at the proximal end thereof, for rotation on gear block 36 about the axis 34C. In addition, the gear block guidingly receives a "finger rack" 87 operatively engaged with the gear 84 to rotate it about axis 33C. A unique feature of this arrangement as shown in Fig. 7 is that by providing the two gears 84 and 86 with different numbers of teeth, and a shorter length of finger 34 than that of finger 33, the arms and jaws thereof can be closed on the flange of a tool holder brought in on a tool holder bucket from a conveyor belt disposed at an angle with respect to the side of the machine head. This results in a substantial conservation of space.

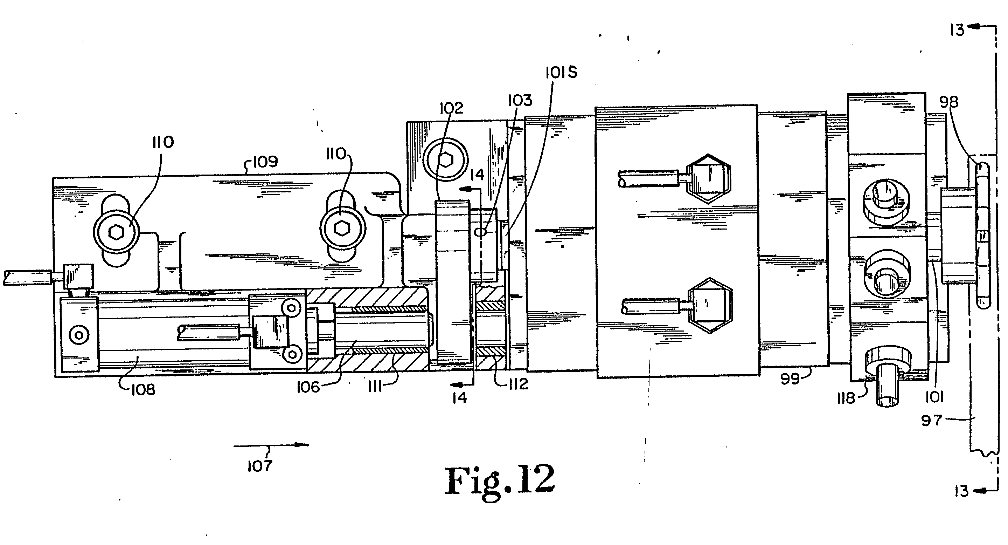

The finger rack 87 is connected to an air valve and rack arm 88 by a cap screw 89 (Figs. 7 and 11), with a finger rack spacer sleeve 91 concentric with the screw and filling the space between the end 87E of the finger rack and the inner face 88F of the arm 88. The end of arm 88 opposite that secured to the screw 89 is connected to the end of a piston rod of a double acting air cylinder mounted in block 36, the mounting bolts for one of the cylinder heads being shown at 92 in Fig. 11. The piston rod axis is at 93 and hidden behind the end portion 90 of the arm 88. A full stroke of this piston in the piston extension direction opens the fingers to the positions shown in Figs. 1B and 7. Reversal of the direction of the stroke will close the fingers to the point of stopping by clamping on a toolholder flange or, in the absence of a tool holder, by the limit of stroke of the piston. This is just short of a position of abutment of the finger stop bosses 33B and 34B with each other (Fig. 7).

The pivoting of the gear block 36 is achieved by driving a sprocket 94 (Fig. 7) secured to the shaft assembly 96 to which the gear block 36 is secured. This sprocket is driven by a chain 97 (Fig. 1A), the lower portion of which, as well as the sprocket 94 are omitted from Fig. 1A to avoid unduly complicating that schematic drawing. The chain is driven by a sprocket 98 on the shaft of a rotary actuator 99 Figs. 1A, 12 and 13 secured in the housing.

Referring again to Figs. 2A and 4A, one can see that the fingers must swing through an arc of 180° to move the tool holder from the position it has in a conveyor bucket, and the position it has in the spindle of the machine. Accordingly, where the sprocket sizes are the same at both ends of chain 27, the rotary actuator must have the capability of 180° of shaft drive. It was further mentioned above that, to remove a tool holder from a conveyor bucket, the fingers must move upward through an arc of 10°. This increases the total index requirement for the fingers to 190°. Therefore, if the rotary actuator shaft sprocket and gear block sprocket are of the same size, the rotary actuator stroke must be 190°. Preferably, the sprocket sizes are selected such that the rotary actuator stroke is 270° for 190° of gear block rotation. This makes more torque available from a rotary actuator of a given size, to be able to rotate heavier tools. It will be apparent that some options are available, but this has proved to be very satisfactory and the description will proceed for this particular embodiment of the finger swing drive.

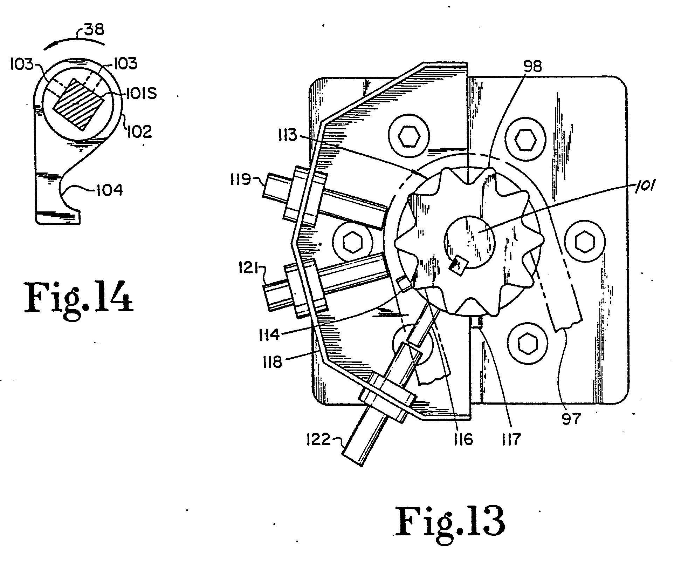

Referring now particularly to Fig. 12, the rotary actuator shaft 101 is provided with the sprocket 98 on one end and an index stop finger 102 secured by two set screws 103 tightened onto the opposite square end 101S of the shaft. The stop finger has a curved notch 104 (Fig. 14) therein for engagement with a finger gag 106 (Fig. 12) when the latter is projected in the direction of arrow 107 and the stop finger is rotating in the direction of arrow 38 (Figs. 2A and 14). The finger gag is secured to the piston rod of the double acting air cylinder 108 secured to a bracket 109 which is, in turn, secured to the housing as by cap screws 110. Bracket 109 includes a portion having a bushing 111 therein guidingly receiving the finger gag. A similar bushing 112 is secured in an aperture in bracket 109 and is aligned on the common axis of the piston rod, finger gag guide bushing 111 and bushing 112. This finger gag stops rotation of the finger in the direction of arrow 38 at a position where the tool holder gripper fingers are in a horizontal plane aligned with the tool holder receiver flange of a tool holder in a bucket in the load/unload position. If it were not for the finger gag, every actuation of the rotary actuator in the direction of arrow 38 would cause rotation of the fingers completely around to the attitude shown in Fig. 4A for insertion of a tool holder in or removal of a tool holder from the machine spindle. The bushing 112, receiving the finger gag when it is advanced by the air cylinder 108, provides the additional support desired for long life despite repeated impacts of the finger with the finger gag during operation of the rotary actuator.

While the milling machine operation, tool conveyor operation, loading and unloading of tools, are all controlled automatically in the operation of the machining center, it is desirable to have some means for position sensing to facilitate control. For that purpose with reference to finger swing position, an indicator finger assembly 113 (Fig. 13) is keyed to the rotary actuator shaft 101 as is the sprocket 98. This includes three position-indicator fingers or posts 114, 116, and 117 circularly spaced on a ring 113 keyed and secured to the shaft 101 by a set screw. There is a sensor mounting bracket 118 secured to the rotary actuator and its mounting bracket secured to the housing. Three proximity sensor switches 119, 121, and 122 are mounted to this bracket. Post 114 and sensor switch 121 cooperate to signal the full index of the rotary actuator in a clockwise direction (Figs. 1A, 3A, and 6A). Post 116 and switch 122 cooperate to signal a 10° counterclockwise rotation from full index, this being the point at which the finger gag, when extended, can stop the rotary actuator and thus stop the counterclockwise travel of the gripper fingers at the position shown in Fig. 2A for engaging or disengaging the grooved flange of a tool holder in a conveyor bucket. Post 117 and switch 119 cooperate upon a complete counterclockwise index of the rotary actuator whereupon the tool holder gripping fingers have reached the spindle load/unload position (Figs. 4A and 5A).

While the specific points of attachment of the tool changer housing to the milling machine head are well situated to provide a convenient and secure attachment to the Hurco Model KMB-I Milling Machine mentioned above, the present invention could be employed with a variety of machines. Therefore, such details will not be described herein. Suffice is to say that a portion 126 (Figs. 1A and 7) of the housing mounting bracket is provided with a central aperture 127 and four bolt apertures 128 for securing directly to the bottom of a head 14 centered on the spindle axis 129. This particular bracket is precisely centered with respect to the plane 131 containing the axis of the spindle and the axis of the tool holder conveyor bucket which is positioned in the load/unload or transfer point of the tool changer.

To assist the machine controller in detection and ascertainment of the arrival of a tool holder in the transfer point position, there is a sensor switch 132 mounted in the housing (Fig. 7). This switch responds to a button-head screw 133 (Figs. 8 and 10) in the outer wall of a certain bucket which, for control reference purposes, is designated as the "No. 1" bucket. This is used for reference purposes. Apart from that, the position of the conveyor is continuously updated by pulses from the shaft encoder 57 on the end of the conveyor drive servo motor as the motor operates in the forward or reverse direction to drive the conveyor in either direction.

It was mentioned above that the tool holder bucket has an index key in it for reception in the index slot in the tool holder flange. Similarly, the finger 33 has an index key 134 thereon which engages the index slot in the tool holder flange when the finger closes on the tool holder in the bucket. Accordingly, it maintains the correct index of the tool holder as it swings the tool holder up and out of the bucket, and then down and around and up into the spindle where a key in the spindle then engages a slot in the tool holder flange to properly index the tool with reference to the spindle.

In order to provide access to the interior of the housing for convenient replacement and substitution of tools with tool holders in the conveyor buckets, the housing is provided with a side cover 136 (Fig. 1A). This

-18-

is attached to the stationary portion of the housing by hinges 137 along the top. One long piano hinge or a series of hinges with aligned axes can be provided. This cover can be simply opened up in the direction of arrow 138 and rested on top of the stationary portion of the housing, as indicated by the dotted lines 136A shown in Fig. 1A. A window can be provided in the side wall of this swingable housing cover.

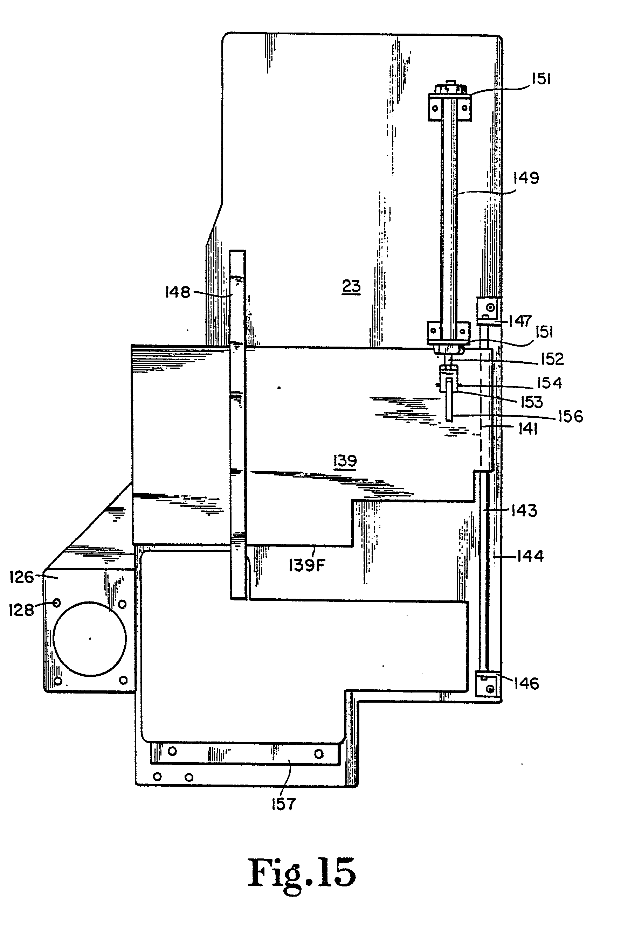

In order to provide some isolation of the housing interior from the work area, a sliding door 139 is provided in the lower front of the housing. This housing bottom door has an edge-formed tube 141 therein slidingly and guidingly received on a guiderod 143 secured to the bottom of the housing by a guiderod support bracket 144 secured to the bottom plate 23 and having a pair of apertured ears 146, 147 holding the guide rod in them. The other side of the door is slidably supported on a slide rail or support bar 148 closely spaced below and fastened by suitable brackets to the bottom 23 of the housing. The door is shown in the open position in the solid outline 139 in Fig. 15. It is pushed to this open position by a pneumatic cylinder 149 secured to the housing bottom 23 by a pair of end mounting brackets 151. A piston rod 152 has a clevis 153 pinned at 154 to a bracket 156 welded on the bottom of the door. The door is shut against a rubber bumper 157 by the same cylinder by applying air to the opposite end, it being a double acting pneumatic cylinder. The bumper is mounted to the bottom flange at the inside front wall of the housing and extends slightly below the housing to provide a sufficiently high abutment surface for the front edge 139F of the chip door to reliably engage.

As shown in Fig. 15, this door is entirely covered by the housing, regardless of whether the door is open or shut. Therefore, there is no hazard to the operator during a tool change operation such as would exist if an outwardly swinging door were operated during a tool transfer between the storage magazine and spindle.

## Automatic Tool Changing Sequence

The mechanical sequence of events that occur during an automatic tool change are as follows:

1.  The spindle 18 travels to maximum "Z" up position and "slide" door 139 at bottom of tool housing opens (when automatic tool change is initiated).

2.  With an empty bucket in "clear open fingers" position, the open tool fingers rotate counterclockwise (CCW) from tool housing until they are positioned around the tool holder in spindle (fingers at 180° CCW), then the fingers clamp onto tool holder. (Key 134 on finger engages the deeper slot in "V" groove of tool holder.)

3.  Spindle unclamps tool holder, then the fingers rotate 190° CW (clockwise) positioning tool holder into housing. As the tool is rotated through the opening in bottom of housing, opposing blasts of air "clean" chips and coolant from tool.

4.  The empty bucket at "clear tool" position in magazine moves to the "load/unload" position beneath tool fingers (and tool holder).

5.  The fingers rotate 10° CCW to insert tool holder into bucket, then the fingers unclamp and open fully. (Deeper slot in "V" groove of tool holder engages key 81H in bucket.)

6.  "New" tool bucket (determined by program selection) moves to the "load/unload" position, and fingers clamp onto "new" tool holder.

7.  Fingers rotate 10° CW (to the 190° CW position) to lift tool holder clear of bucket, then the "empty" bucket moves to "clear tool" position.

8. Finger mechanism rotates tool from magazine...as tool passes through bottom opening, opposing blasts of air (from nozzles not shown herein) "clean" tool.

9. The fingers rotate to the 180° CCW position to insert tool holder into spindle...spindle clamps tool holder, and fingers unclamp.

10. Conveyor moves buckets to "clear finger" position.

11. "Empty" open fingers rotate CW 190° into tool changer housing, and "slide" door closes as the spindle moves to its programmed position and the machining cycle resumes.

## Conclusion

While the invention has been illustrated and described in detail in the drawings and foregoing description, the same is to be considered as illustrative and not restrictive in character, it being understood that only the preferred embodiment has been shown and described and that all changes and modifications that come within the spirit of the invention are desired to be protected.

It should be also understood that the invention is not limited to mechanical cutting machines but may also be applied to other types of machines. An example is electrical discharge machining (EDM) equipment. In a "plunge cut" EDM, instead of a spindle holding a cutting tool, and activating the tool by rotating it on an axis along which the spindle moves to address the workpiece, the tool head holds an electrode tool, which usually has a longitudinal axis, and activates the tool by energizing it as it moves along the tool axis to address the workpiece.

CLAIMS:

1. A tool changer for a machine tool having activator means to receive and activate tools for doing work on a workpiece, said activator means having an axis of addressing a workpiece, said tool changer comprising:

a plurality of storage carriers for tools, said carriers being movable from a storage area to a tool transfer point, one-at-a-time;

tool transfer means adjacent said activator means and said transfer point and operable, when actuated, to transfer a tool between said activator means and one of said carriers at said transfer point,

said transfer means having tool gripper means with a portion grippingly engageable with a tool at said transfer point and thereupon movable in an arc in a plane containing said transfer point and said activator means and said addressing axis, to thereby move the tool from the transfer point to the activator means,

and said tool changer being characterized in that said carriers include tool receiving receptacles and means for driving and guiding said receptacles to and from said transfer point, and said receptacles are upwardly opening buckets having walls, said bucket walls having wall opening tool holder passageway notches therein to facilitate arcuate downward movement of a tool into a bucket without rectilinear translation of either the tool

-22-

or bucket, and said buckets are guided so that, when a bucket is at said transfer point, the notch is intercepted by said plane and faces said transfer means.

2.    The tool changer of claim 1 and further characterized in that:

said transfer means include a body mounted for rotation on an axis normal to said plane,

said gripper means include first and second arms having proximal portions pivotally mounted to said body, and distal portions, said arms being pivotable on said body to move between closed positions where said distal portions cooperate to provide said grippingly engageable portion and open positions where said distal portions are widely separated,

said tool changer being further characterized in that the mounting and configuration and operation of said gripper means are such that the said distal portions are so widely separated, when in said open positions, that each said tool receiving receptacle can be moved out of registry with said transfer point and another receptacle moved into registry with said transfer point without interference with said arms and without rotating said gripper mounting body on said axis.

3. The tool changer of claim 1 or 2 and further characterized in that:

said transfer means have a power-operated gear rack;

said first gripper arm has a first gear on the proximal end thereof and meshed with said rack to swing said arm between open and closed positions thereof, and

said second gripper arm is shorter than said first arm and has a second gear on the proximal end of said second arm and meshed with said first gear,

said second gear being smaller than said first gear and driven by said first gear to swing said second arm through a larger angle than said first arm as said arms are driven between said open and closed positions by said rack.

4. The tool changer of claim 3 further characterized in that:

one of said arms has a tool holder index lug therein engageable with a notch in a tool holder flange to maintain tool index during transfer of a tool between one of said receptacles at said transfer point and said activator means.

5. The tool changer as in any of the preceding claims and further chracterized in that :

each said buckets has a pocket at the bottom and a well at the top to retain the pull knob and gripper flange, respectively, of a tool holder and yet facilitate installation and removal of tool holders, and

the said passageway notch in the bucket is upwardly opening and extends from said pocket upward through said well to the top of the bucket.

6. The tool changer of claim 5 and characterized in that:

a tool holder indexing lug is secured to each bucket and projects into said well for reception in an index notch in a tool holder flange when received in said well.

7. The tool changer of claim 5 and characterized in that:

one of said buckets has an inner wall extending downward from said well to said pocket, said wall converging inwardly from said well to said pocket, and

the passageway notch has edges converging from said well to said pocket, and

said well is circular and said notch edges subtend an angle of less than 180° about the axis of said well.

-25-

8. The tool changer of claim 5 and characterized in that:

said wall is frustoconical,

said well and pocket are circular about the axis of said frustoconical wall,

said wall opening passageway notch is upwardly opening and has edges converging from said well to said pocket at an angle substantially equal to the vertex angle of said frustoconical wall, and

said frustoconical wall extends more than 180° about said axis at both the top and bottom of said passageway notch.

9. The tool changer of claim 1 and further characterized in that:

there are endless belt receptacle conveyor means, including reversible servo motor conveyor drive means, with said buckets spaced along said conveyor means and movable by said conveyor means to said transfer point, and

said buckets are affixed to said belt and oriented on said belt so that, when a bucket is stopped at said transfer point, the passageway notch in the bucket is intercepted by said plane and faces said transfer means.

-26-

10. The tool changer of any preceding claim and further characterized in that:

a housing covers said storage carriers and said transfer means, said housing having a bottom opening under said transfer point and said transfer means, the vertical projection of said opening being at least co-extensive with the downward projection of the path of said transfer means and tool out of said housing from said transfer point to said activator means,

there is a closure for said opening, said closure being operable, when activated, to uncover said opening to enable a tool transfer, and cover said opening upon completion of a tool transfer,

said closure is a sliding door, the tool changer further comprising a power actuator coupled to said door to move it between uncovering and covering position,

said storage area is behind said transfer point, and

said bottom opening is under said transfer point, and

the uncovering position of said door is behind said opening, and

said housing completely covers said door when said door is in said covering position,

said housing has a front, a rear, a mounting side mountable beside the portion of the machine tool having said activator means therein, and an access side for access to storage carriers in said storage area, and

said housing completely covers said door at the front and access side at all times.

11. The tool changer of claim 10 and further characterized in that said housing completely covers said door at the rear at all times.

Fig.1A

Fig.1B

Fig.2A

Fig.2B

Fig.3A

Fig.3B

Fig.4A

Fig.4B

Fig.5A

Fig.5B

Fig.6A

Fig.6B

Fig.7

Fig.11

Fig. 8

Fig. 9

Fig. 10

0103956

Fig.12

Fig.14

Fig.13

Fig.15